# EUROPÄISCHE PATENTSCHRIFT

(11) **EP 0 817 704 B1**
(45) Veröffentlichungstag und Bekanntmachung des Hinweises auf die Patenterteilung: **03.12.2003**
(21) Anmeldenummer: 96901790.4
(22) Anmeldetag: 07.02.1996
(51) Int. Cl.: B25B 23/00, B25B 23/10

(54) **FUTTER MIT KUPPLUNG**
CHUCK WITH COUPLING
MANDRIN MUNI D'UN SYSTEME D'ACCOUPLEMENT

(30) Priorität: 21.03.1995 DE 19510169
(43) Veröffentlichungstag der Anmeldung: 14.01.1998
(73) Patentinhaber: Toolit GmbH, 64289 Darmstadt (DE); LEITNER, Kajetan, 72461 Albstadt (DE)
(72) Erfinder: LEITNER, Kajetan, D-72461 Albstadt (DE)
(74) Vertreter: Jeck, Anton, Dipl.-Ing.
(86) Internationale Anmeldenummer: EP9600504
(87) Internationale Veröffentlichungsnummer: WO96029182

(56) Entgegenhaltungen:
- EP-A- 0 086 352
- DE-A- 2 621 932
- DE-A- 3 330 962
- DE-A- 3 429 558
- US-A- 4 809 572

## Beschreibung

Die Erfindung betrifft ein Futter mit Kupplung zum Spannen von Kopf- und/oder Stiftschrauben nach dem Oberbegriff des Anspruches 1.

Futter dieser Art sind bekannt und z.B. in der DE 26 21 932 und der DE 34 29 558 C2, die als nächstliegender Stand der Technik angesehen wird, beschrieben. Bei der bekannten Kupplung handelt es sich um ein StanzBiegeteil, das aus herstellungstechnischen Gründen weder beliebig dick noch hart sein kann. Das bekannte und federhart ausgebildete Teil ist deshalb einem Verschleiß ausgesetzt, der insbesondere bei der Verarbeitung großer Holzschrauben, die ein erhebliches Eindrehmoment zu ihrer Montage erfordern, seine baldige Auswechselung erforderlich macht. Dies hat zur Folge, daß dem Benutzer Ersatzkupplungsscheiben zur Verfügung gestellt werden müssen, die er zudem selbst auswechseln muß.

Ausgehend von dem obigen Stand der Technik liegt der Erfindung die Aufgabe zugrunde, das gattungsgemäße Futter ohne unangemessenen konstruktiven Aufwand so weiterzubilden, daß die Kupplung praktisch verschleißfrei ist und auch bei härtesten Einsatzbedingungen verwendet werden kann.

Die gestellte Aufgabe wird erfindungsgemäß durch die Merkmale des Anspruches 1 gelöst.

Man erkennt, daß die Erfindung jedenfalls dann verwirklicht ist, wenn entweder die Antriebswelle oder die Schraubenwelle mit einem Außenpolygon versehen ist, das in eine Hülse einkuppelbar ist. Die Hülse ist ihrerseits mit einem entsprechenden Innenpolygonen ausgestattet. Durch diese Polygone, die gegeneinander verschiebbar sind, kann die betriebsgemäße Verbindung zwischen der Schraubenwelle und der Antriebswelle problemlos hergestellt werden. Eine Entkupplung der beiden Wellen ist ebenfalls mit keinen Problemen verbunden. Dabei bedient man sich einer Kupplungshülse, die in bekannter Weise durch eine Stellscheibe axial verschiebbar ist. Die nähere Funktionsweise der Kupplungshülse sowie des Futters ist ausführlich in der gattungsgemäßen Druckschrift DE 26 21 932 beschrieben. Die bei der Erfindung verwendeten Polygone sind vorzugsweise als Sechskante ausgebildet. Der Sechskant der Abtriebswelle ist vorzugsweise so ausgebildet, daß sein Eckmaß etwa dem Durchmesser der Welle entspricht. Dadurch wird erreicht, daß für die Übertragung der Drehmomente die geringsmögliche Kraft erforderlich ist.

Eine weitere zweckmäßige und vorteilhafte Maßnahme ist in dem abhängigen Anspruch 5 angegeben.

Ein Ausführungsbeispiel der Erfindung ist in der Zeichnung schematisch dargestellt und wird im folgenden näher erläutert. Es zeigen
- Fig. 1: ein Futter im axialen Querschnitt,
- Fig. 2: das obere Teil eines anderen Futters,
- Fig. 3: eine Verbindung zwischen einer Schraubenwelle und einer Antriebswelle,
- Fig. 4: den mit V bezeichneten Teil nach Fig. 1 vergrößert dargestellt,
- Fig. 5: den mit VI bezeichneten Teil nach Fig. 3 vergrößert dargestellt,
- Fig. 6: den mit VII bezeichneten Teil nach Fig. 2 vergrößert dargestellt,
- Fig. 7: das obere Endstück der Schraubenwelle nach Fig. 1,
- Fig. 8: eine Halbschale nach Fig. 1 und im axialen Querschnitt,
- Fig. 9: eine Stellscheibe in axialer Draufsicht und
- Fig. 10: das Kupplungsorgan nach Fig. 1 im axialen Querschnitt.

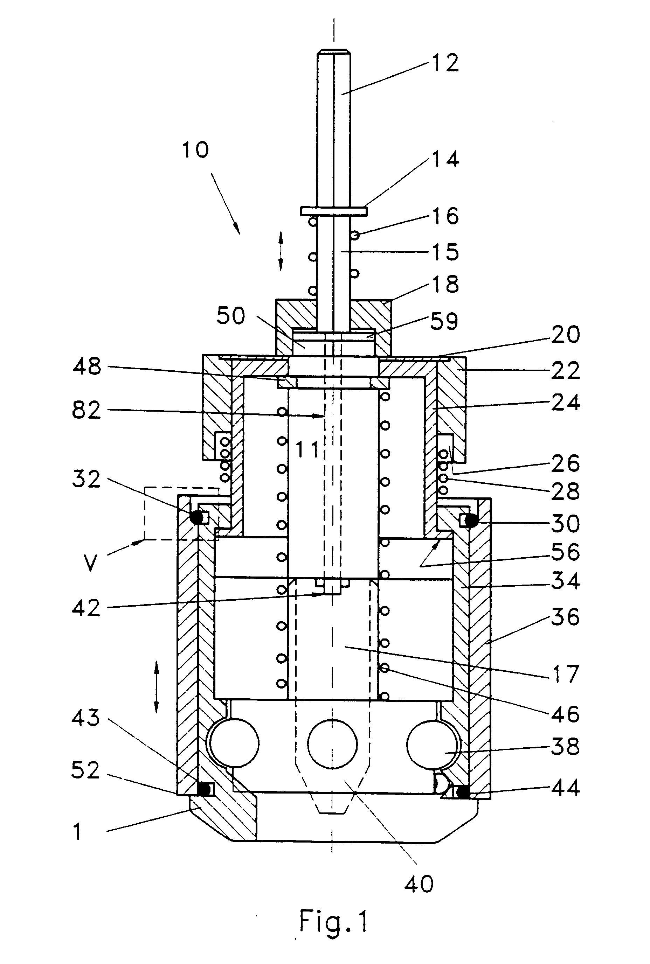

In Fig. 1 ist ein Futter 10 zum Spannen von Kopf- und Stiftschrauben beim Einschraubvorgang dargestellt. Das Futter 10 besteht aus einer Lagerhülse (nicht dargestellt) mit den Schaft der Schraube umfassenden, radial verschiebbar in der Lagerhülse gelagerten Spannkugeln 38, einer die Lagerhülse umschließenden axial gelagerten Spannhülse 34 für die Spannkugeln 38 und einer die Lagerhülse durchdringenden mit einem Schraubenmitnehmer versehenden Schraubenhülle 11. Dabei sind die Spannhülse 34 und die Lagerhülse gegen die Kraft je einer Feder längsverschiebbar angeordnet. Die Spannhülse 34 ist im Bereich der Haltelage der Spannkugel 38 mit einem Spannkonus versehen, der unter der Wirkung der Federspannung die Spannkugeln 38 zusammen und damit gegen den Schaft der Schraube drückt. Axial neben den Spannkonus ist ein Freiraum zur Aufnahme der Spannkugeln 38 beim Einführen einer Kopfschraube vorgesehen. Sowohl die Lagerhülse als auch die Spannhülse 34 stehen in gleicher Richtung unter der Vorspannung je einer Feder, die diese beiden Hülsen von einem am rückwärtigen Ende des Futters 10 liegenden Widerlager in Richtung Einschraubstelle drücken. Dieses Widerlager besteht aus einem in die Spannhülse (Gehäuse 34) hineingreifenden Widerlagerrohr, das Kupplungsteile zum Begrenzen der Einschraubtiefe aufnimmt. Der nicht näher dargestellte Spannkonus der Spannhülse 34 liegt zu der Einschraubstelle näher als ihr Freiraum für die Spannkugeln 38. Zwischen dem Spannkonus und dem Freiraum ist eine Anschlagschulter zum Begrenzen des Weges der Lagerhülse zur Einschraubstelle hin vorgesehen.

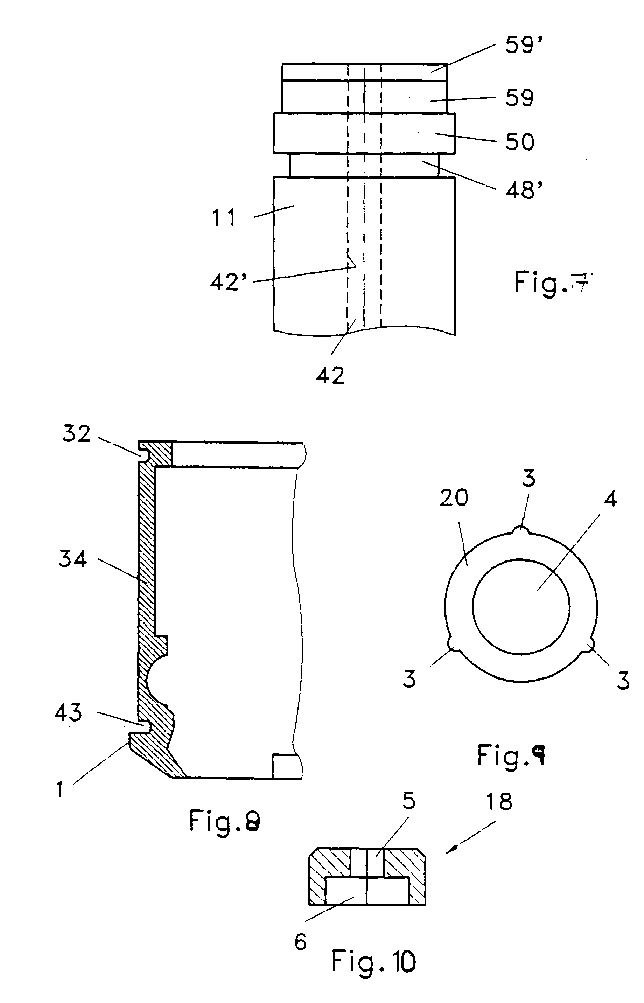

Das in Fig. 1 im Schnitt dargestellte Futter 10 weist ein aus zwei Schalen bestehendes Gehäuse 34 zum Spannen von Kopf- und/oder Stiftschrauben auf. Das Futter 10 besitzt ferner eine Schraubenwelle 11 und eine in bezug auf die Schraubenwelle 11 axial angeordnete Antriebswelle 12 mit einem federbelasteten und in Richtung des Doppelpfeiles verstellbaren Kupplungsorgan 18, das mit einem Gegenorgan 50 der Schraubenwelle 11 betrieblich verbindbar ist. Ferner ist eine federbelastete, axial verstellbare und das Kupplungsorgan 18 außer Betrieb bringbare Stellhülse 22 vorgesehen, die in Richtung des mittleren Doppelpfeiles axial verstellbar ist. Das Kupplungsorgan 18 weist eine Ausnehmung 6 (vgl. Fig. 10) auf, die mit dem zugeordneten Vorsprung 59 des Gegenorgans 50 in Wirkverbindung bringbar ist. Der Vorsprung 59 und die zugeordnete Ausnehmung 6 sind einander zugekehrt. Ferner ist zu erkennen, daß der Vorsprung 59 in wirksamer Betriebsstellung der Kupplung in der Ausnehmung 6 untergebracht ist. Dabei ist der Vorsprung 59 komplementär zur Ausnehmung 6 ausgebildet und weist einen vom Kreis verschiedenen Querschnitt auf. In der hier dargestellten und bevorzugten Ausführungsform handelt es sich bei dem Vorsprung 59 um einen Sechskant, der mit der entsprechenden Ausnehmung 6 paßgenau verbindbar ist. Das Kupplungsorgan 18 ist ferner in Form einer mit der Antriebswelle 12 unverdrehbar verbindbaren und axial verstellbaren Hülse ausgebildet, die mit einer Wendel- bzw. Schraubenfeder 16 in Druckverbindung steht. Die Wendelfeder 16 ist zwischen einem Sprengring 14 und der Außenseite des Kupplungsorgans 18 angeordnet und eingespannt. Die Wendelfeder 16 ist bestrebt, das Kupplungsorgan 18 gegen die Stellhülse 22 zu drücken. Zwischen der Stellhülse 22 und dem Kupplungsorgan 18 ist die in Fig. 9 näher dargestellte Stellscheibe 20 angeordnet.

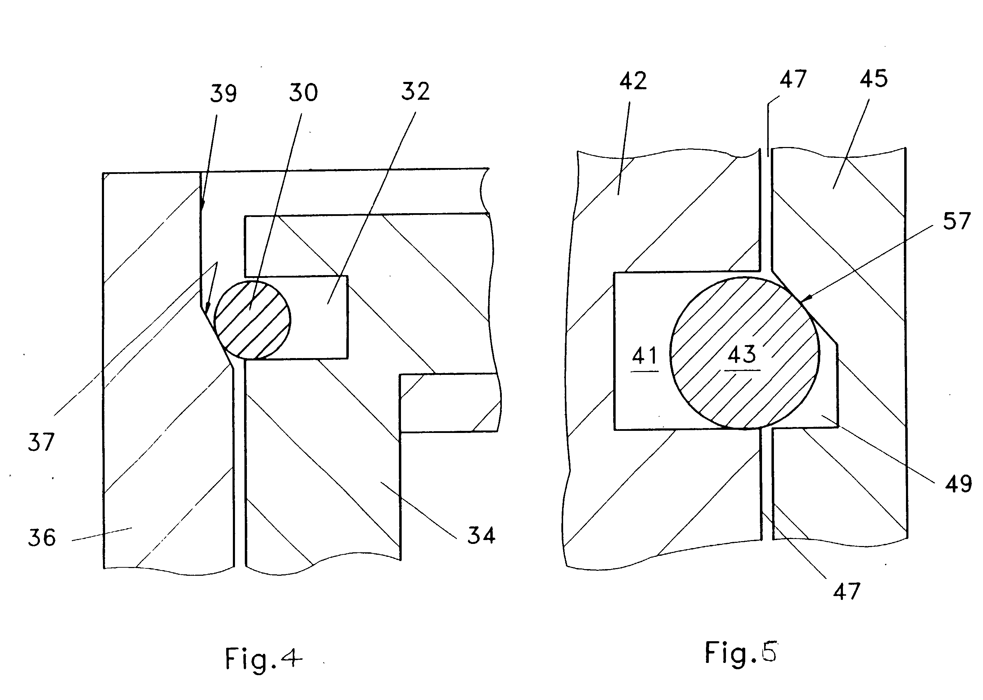

Das Futter 10 umfaßt ferner eine Zwischenhülse 24, die mit der Schraubenwelle 11 über ein Verbindungsorgan 48 verbunden ist. Das untere Ende der Zwischenhülse 24 weist einen nach außen weisenden Bund 56 auf, an dem sich das Gehäuse 34 abstützt. Zwischen dem Gehäuse 34 und der Stellhülse 22 ist eine Schraubenfeder 28 angeordnet, die in eine nach innen offene Ringnut 26 der Stellhülse 22 hineinragt. Die Schraubenfeder 28 ist bestrebt, die Stellhülse 22 gegen das Kupplungsorgan 18 zu drücken. Die Kraft der Schraubenfeder 28 ist jedoch in Axialrichtung geringer als die Kraft der Schraubenfeder 16, so daß die Stellhülse 22 in Ruhestellung des Futters die in Fig. 1 dargestellte Position einnimmt. Das Gehäuse 34 besteht aus zwei gleichen Halbschalen z.B. aus Kunststoff oder Metall, deren Stoßstellen sich in axialer Richtung erstrecken. Der Mantel des Gehäuses 34 ist annähernd zylinderförmig. In der Außenwand des Gehäuses 34 sind zwei radial nach außen hin offene Nuten 32 und 43 ausgebildet, die jeweils einen Spannring 30, 44 aufnehmen. Das Gehäuse 34 ist von einer zylindrischen und axial aufsteckbaren Hülse 36 formschlüssig umgeben. Die Hülse 36 stützt sich über ihre eine axiale Stirnseite am Bund 1 des Gehäuses 34 ab, während im Bereich der anderen axialen Seite der Spannring 30 aus seiner Ringnut 32 herausragt und gegen die Hülse 36 radialinnenseitig drückt. Die Hülse 36 weist im Bereich des Spannringes 30 eine Innen Durchmessererweiterung 39 mit einer kegelstumpfförmigen Schräge 37 auf (vgl. Fig. 4). Die Tiefe der Ringnuten 32, 43 ist dabei mindestens so groß wie die Dicke der Spannringe 30, 44, gemessen in radialer Richtung. Im entspannten Zustand ist der Spannring 30 in seiner Ringnut 32 nur teilsweise angeordnet. Wird nun die Hülse 36 in axialer Richtung und in bezug auf das Gehäuse 34 nach oben verschoben, und zwar in Richtung des Kupplungsorgans 18, dann drückt die Schräge 37 gegen den Spannring 30 und versetzt ihn in seine Nut 32, von der er voll aufgenommen wird. Bei Überwindung der Radialkraft, die notwendig ist, um den Spannring 30 nach innen zu drücken, kann die Hülse 36 vom Gehäuse 34 entfernt werden. Die Kraft, die hierbei angewendet werden muß, hängt vom Winkel der Schräge 37 ab, der vorzugsweise 10 bis 50° beträgt. Der Spannring 44, der in seiner Nut 43 angeordnet ist, und der Spannring 30 können sodann vom Gehäuse 34 gelöst werden, so daß dessen Halbschalen sich vom Futter lösen können. Innerhalb des Gehäuses 34 sind ferner aus dem Stand der Technik bekannte Kugeln 38 sowie eine Klinge 17 untergebracht. Ferner ist im Gehäuse 34 eine weitere Spiralfeder 46 angeordnet.

Wird nun das Gehäuse 34 samt der Hülse 36 in axialer Richtung nach oben gegen die wirkung der Feder 28 verschoben, dann steht die obere Stirnseite des Gehäuses 34 mit der Stellhülse 22 in Druckverbindung, die ihrerseits das Kupplungsorgan 18 vom Gegenorgan 50 löst, wobei das Kupplungsorgan 18 auf den Ring 14 zu bewegt wird. Das Kupplungsorgan 18 und das Gegenorgan 50 sind ausser Eingriff, so daß die Antriebswelle 12 mit der Schraubenwelle 11 nicht mehr kraftschlüssig verbunden ist. Die Drehungen der Antriebswelle 12 werden somit auf die Schraubenwelle 11 nicht mehr übertragen.

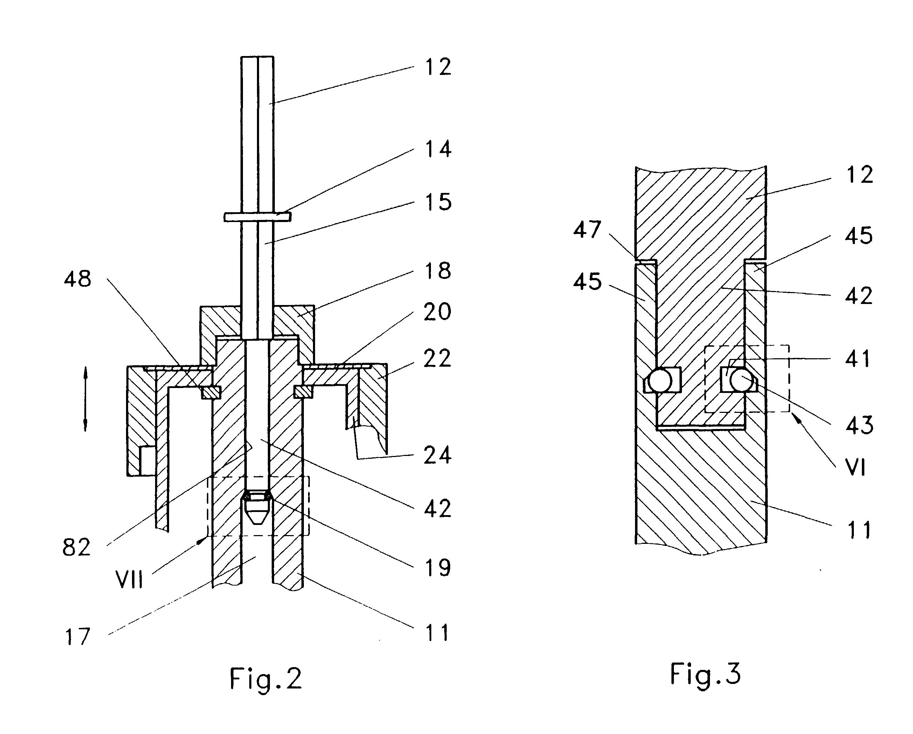

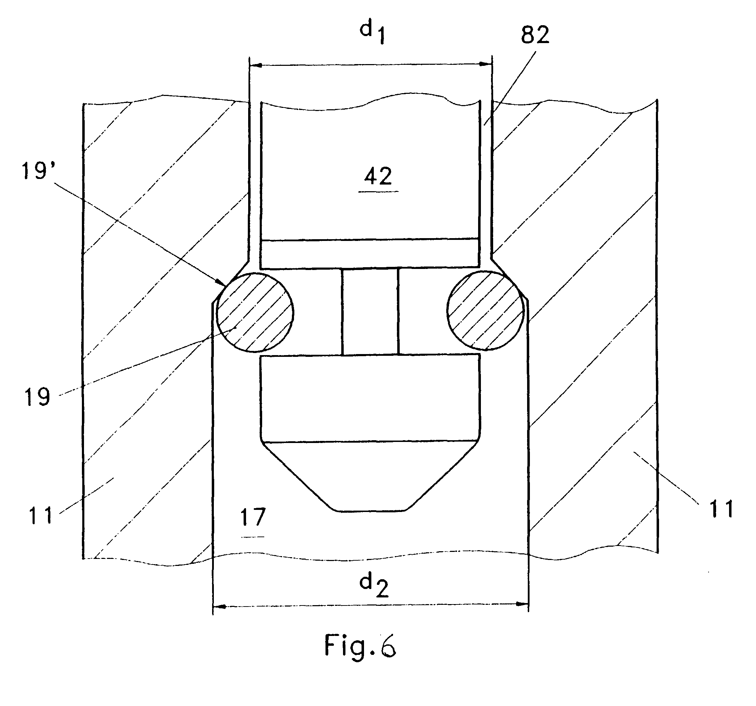

Die Figuren 2 und 6 lassen erkennen, daß in der Schraubenwelle 11 eine durchgehende Bohrung 17 mit einer Durchmesserverringerung 82 ausgebildet ist, deren Innendurchmesser d1 kleiner ist als der Durchmesser d2 der Bohrung 17. Die Verlängerung 42 der Antriebswelle 12 durchquert die Durchmesserverringerung 82, wobei das Ende in der Verlängerung 42 eine radiale und nach außen hin offene Ring-Nut mit einem Sprengring 19 trägt. Dieser Sprengring 19 stützt sich an einer Schräge 19' zwischen der Öffnung 17 und der Durchmesserverringerung 82 ab. Dadurch nimmt die Antriebswelle 12 eine in bezug auf die Schraubenwelle 11 axial unverrückbare Position ein.

Eine andere Möglichkeit, die Antriebswelle 12 mit der Schraubenwelle 11 zu verbinden, ist in den Fig. 3 und 5 dargestellt. In der Schraubenwelle 11 ist eine Sacklochbohrung 47 ausgebildet, in welche die Verlängerung 42 hineinragt. Die Länge der Sacklochbohrung 47 entspricht der Länge der Verlängerung 42. Im unteren Bereich besitzt die Verlängerung 42 eine radial nach außen hin offene Ringnut 41, während in der Sacklochbohrung 47 des Abschnittes 45 eine radial nach innen offene Ringnut 49 mit einer Schräge 57 ausgebildet ist. Der Sprengring 43 ist im entspannten oder nach außen gespannten Zustand teilweise in der Ringnut 41 und teilweise in der Ringnut 49 angeordnet. Dabei ist die radiale Tiefe der Ringnut 49 so bemessen, daß sie höchstens der halben Dicke (Radius) des Sprengringes 43 entspricht. Der Sprengring 43 stützt sich in seiner Betriebsstellung an der Schräge 57 ab, deren Neigungswinkel vorzugsweise 10 bis 60° betragen kann. Je größer der Neigungswinkel der Schräge 57 ist um so größere Kraft muß aufgewendet werden, um die Verlängerung 42 von der Schraubenwelle 11 lösen zu können. Soll eine unlösbare Verbindung zwischen diesen beiden Teilen hergestellt werden, dann beträgt der Winkel der Schräge 57 annähernd 90°. Wird nun die Verlängerung 42 aus der Sacklochbohrung 47 herausgezogen, dann drückt die Schräge 57 gegen den Sprengring 43, wodurch er in die Ringnut 41 versetzt wird, so daß die Verlängerung 42 von der Schraubwelle 11 gelöst werden kann. Durch diese Verbindung können die beiden Teile problemlos sowohl verbunden als auch gelöst werden. Es handelt sich hierbei um eine Art von Steckverbindung, die durch Versetzen von zwei Teilen hergestellt wird. Probleme, wie sie bei Schraubverbindungen auftreten - es sind Schrauben mit Unterlegscheiben sowie ein Schraubendreher erforderlich - treten hier nicht auf. Die Fig. 6, 7, 8 und 10 zeigen weitere Einzelheiten der in Fig. 1 dargestellten Teile.

In Fig. 9 ist die Stellscheibe 20 dargestellt, die drei radial nach außen hin vorstehende Noppen 3 und eine zentrische Öffnung 4 aufweist. Die Stellscheibe 20 wirkt mit der Stellhülse 22 zusammen. Dies ist jedoch in der DE 26 21 932 näher beschrieben.

In Fig. 7 ist das obere Endstück der in Fig. 1 dargestellten Schraubenwelle 11 vergrößert dargestellt. Man erkennt eine axiale Bohrung 42' für die Verlängerung 42. Für das Verbindungsorgan 48 (Sprengring) ist eine Ringnut 48' ausgebildet. An die Ringnut 48' schließt sich ein Ringbund 50 an, dessen Durchmesser dem Durchmesser der Zwischenhülse 24 entspricht. An den zylinderförmigen Ringbund 50 schließt sich ein Sechskant 59 an, dessen Eckmaß dem Außendurchmesser der Schraubenwelle 11 entspricht. Dadurch muß die Schraubenwelle 11 minimal bearbeitet werden. Schließlich schließt sich an den Sechskant 59 eine zylinderförmige Verjüngung 59' an, deren Außendurchmesser der Schlüsselweite des Sechskantes 59 entspricht. Diese Verjüngung bewirkt eine Zentrierung und Führung des Kupplungsorganes 18 gegenüber dem Sechskant 59.

Für die Handhabung des Gerätes ist es von großem Vorteil, wenn während des Einschraubvorganges das Futter 10 an seiner drehbaren Hülse 36 festgehalten werden kann, weil dadurch eine genaue und beidhändige Führung der Handbohrmaschine möglich ist. Wenn mit dem Futter 10 über den Kopf geschraubt wird, z.B. in Hartfaser- oder Gipsplatten, ist es unvermeidlich, daß Späne oder Brösel in das Futter 10 fallen, so daß es erforderlich ist, das Futter 10 öfters durch Ausblasen zu reinigen. Dazu müssen seine Innenteile zugänglich sein, das heißt, das Gehäuse 34 soll schnell und einfach abgenommen werden können. Dies wird erfindungsgemäß dadurch erreicht, daß die Hülse 36 in Richtung Schräge 37 (Fig. 5) axial vom Gehäuse abgezogen werden kann. Dies ist möglich, weil die Schräge 37 den Sprengring 30 zusammendrückt und in die Nut 32 versenkt. Der 2. Sprengring 44 ist jetzt frei zugänglich und kann leicht aus seiner Nut 43 herausgehebelt werden. Die Halbschalen können jetzt geöffnet und abgenommen werden. Die Teile 1, 32, 43 und 52 können auch so gestaltet und angeordnet sein, daß ein Abziehen der Drehhülse 52 nach vorne, also weg von der Antriebswelle 12, möglich ist.

## Patentansprüche

1. Futter (10) mit Kupplung sowie einem Gehäuse (34) zum Spannen von Kopf- und/oder Stiftschrauben, das eine Schraubenwelle (11), eine in Bezug auf die Schraubenwelle (11) axial angeordnete Antriebswelle (12), mindestens ein federbelastetes, axial verstellbares und mit der einen der Wellen (11,12) verbundenes Kupplungsorgan (18), ein mit der anderen Welle (12,11) verbundenes Gegenorgan (50), das mit dem Kupplungsorgan (18) betrieblich verbindbar ist, sowie eine federbelastete, axial verstellbare und das Kupplungsorgan (18) außer Eingriff mit dem Gegenorgan (50) bringbare Stellhülse (22) aufweist,
**dadurch gekennzeichnet,**
**daß** das Kupplungsorgan (18) als Hülse ausgebildet ist, die mit einem zugeordneten Vorsprung (59) des Gegenorgans (50) in Wirkverbindung bringbar ist.

2. Futter nach Anspruch 1
**dadurch gekennzeichnet,**
**daß** der Vorsprung (59) durch einen Körper in Form eines Polygons gebildet ist und daß das Kupplungsorgan (18) als Hülse ausgebildet ist, deren Hohlraum (6,62) komplementär zum Polygon ist.

3. Futter nach Anspruch 1 oder 2,
**dadurch gekennzeichnet,**
**daß** das Polygon ein Sechskant ist.

4. Futter nach Anspruch 1 bis 3,
**dadurch gekennzeichnet,**
**daß** der Durchmesser der Schraubenwelle (11) dem Eckmaß des Vorsprungs (59) entspricht.

5. Futter nach Anspruch 3 oder 4,
**dadurch gekennzeichnet,**
**daß** das Gegenorgan (50) in einen zylindrischen Bund (59') übergeht, dessen Durchmesser der Schlüsselweite des Sechskants (59) entspricht.

## Claims

1. Chuck (10), having a coupling as well as a housing (34) for tightening headed screws and/or studs, said chuck including a screw shaft (11), a drive shaft (12) which is axially disposed relative to the screw shaft (11), at least one spring-loaded, axially displaceable coupling member (18) which is connected to one of the shafts (11, 12), a counter-member (50) which is connected to the other shaft (12, 11) and is operationally connectable to the coupling member (18), as well as a spring-loaded, axially displaceable adjusting sleeve (22) which can disengage the coupling member (18) from the counter-member (50), **characterised in that** the coupling member (18) is configured as a sleeve which can be brought into operative connection with an associated projection (59) of the counter-member (50).

2. Chuck according to claim 1, **characterised in that** the projection (59) is formed by a body in the form of a polygon, and **in that** the coupling member (18) is configured as a sleeve, the recess (6, 62) of which is complementary to the polygon.

3. Chuck according to claim 1 or 2, **characterised in that** the polygon is a hexagon.

4. Chuck according to claims 1 to 3, **characterised in that** the diameter of the screw shaft (11) corresponds to the distance between opposed comers of the projection (59).

5. Chuck according to claim 3 or 4, **characterised in that** the counter-member (50) extends into a cylindrical collar (59'), the diameter of which corresponds to the key width of the hexagon (59).

## Revendications

1. Mandrin (10) ayant un système d'accouplement ainsi qu'un logement (34) pour tendre des boulons à tête et/ou filetés, qui comprend un arbre de boulon (11), un arbre d'entraînement (12) agencé en position axiale par rapport à l'arbre de boulon (11), au moins un élément d'accouplement (18) commandé par ressort, réglable en direction axiale et relié à l'un des arbres (11, 12), un élément opposé (50) relié à l'autre des arbres (11, 12) qui peut être relié en fonctionnement à l'élément d'accouplement (18), ainsi qu'une douille de réglage (22) commandée par ressort, réglable en direction axiale et susceptible de mettre l'élément d'accouplement (18) hors d'engagement avec l'élément opposé (50),
**caractérisé en ce que** l'élément d'accouplement (18) est réalisé dans la forme d'une douille qui peut être amenée en liaison d'action avec une saillie (59) correspondante de l'élément opposé (50).

2. Mandrin selon la revendication 1, **caractérisé en ce que** la saillie (59) est formée par un corps de la forme d'un polygone, et **en ce que** l'élément d'accouplement (18) est réalisé dans la forme d'une douille dont l'espace creux (6, 62) est complémentaire au polygone.

3. Mandrin selon l'une quelconque des revendications 1 ou 2, **caractérisé en ce que** le polygone est un hexagone.

4. Mandrin selon l'une quelconque des revendications 1 à 3, **caractérisé en ce que** le diamètre de l'arbre de boulon (11) correspond au surangle de la saillie (59).

5. Mandrin selon l'une quelconque des revendications 3 ou 4, **caractérisé en ce que** l'élément opposé (50) devient un collet cylindrique (59') dont le diamètre correspond au diamètre du cercle inscrit dans l'hexagone (59).
